# EUROPÄISCHE PATENTSCHRIFT

(11) **EP 1 832 871 B1**
(45) Veröffentlichungstag und Bekanntmachung des Hinweises auf die Patenterteilung: **29.12.2010**
(21) Anmeldenummer: 07103605.7
(22) Anmeldetag: 06.03.2007
(51) Int. Cl.: G01N 27/28

(54) **Wechselarmatur für einen Sensor**
Changeover fitting for a sensor
Armature d'échangement pour un capteur

(30) Priorität: 07.03.2006 DE 102006010810
(43) Veröffentlichungstag der Anmeldung: 12.09.2007
(73) Patentinhaber: Endress+Hauser Conducta Gesellschaft für Mess- und Regeltechnik mbH+Co. KG, 70839 Gerlingen (DE)
(72) Erfinder: Schlereth, Rainer, 41469, Neuss (DE); Oppermann, Hans-Joachim, 74376, Gemrigheim (DE)
(74) Vertreter: Andres, Angelika Maria

(56) Entgegenhaltungen:
- EP-A- 0 008 041
- EP-A- 1 156 323
- DE-A1- 3 325 309
- DE-A1- 10 241 833
- FR-A- 2 700 348

## Beschreibung

Die Erfindung betrifft eine Wechselarmatur mit einem Armaturengehäuse und mit einer in dem Armaturengehäuse linear zwischen einer ersten Position und einer zweiten Position geführten rohrförmigen Halterung für einen Sensor, wobei der Sensor eine physikalische und/oder chemische Prozessgröße in einem Prozess bestimmt.

Wechselarmaturen sind in der Analysemesstechnik weit verbreitet. Sie dienen dazu, Sensoren ohne Prozessunterbrechung selbst bei Prozessdrücken bis zu 10 bar und mehr aus dem Prozess zu entnehmen und anschließend wieder in den Prozess einzuführen. Der Sensor wird hierzu automatisch oder manuell von einer Messposition in eine Wartungs- oder Serviceposition und zurück verfahren. In der Wartungsposition wird der der Sensor überprüft, kalibriert oder aber einfach nur gereinigt, was je nach Anwendungsfall für die Güte der Messungen von großer Bedeutung ist.

Als Prozessabschluss zum Medium sind zwei unterschiedliche Lösungen im zum Einsatz: Bei einer ersten Ausführungsform wird ein Kugelhahn bzw. ein Kükenhahn verwendet, der über eine rotierende Walze die Öffnung, durch die der Sensor in den Prozess hinein- und aus dem Prozess herausbewegt wird, zum Prozess hin öffnet oder schließt. Bei einer zweiten Ausführungsform kommt ein Verschlusszapfen zum Einsatz. Dieser Verschlusszapfen ist integraler Bestandteil der Wechselarmatur ist.

Kugelhahnarmaturen werden bevorzugt in Medien mit Feststoffanteil einge-setzt. Unter Feststoffen werden Fasern, aber auch festhaftende Anbackungen von Kalk und ähnlichen Stoffen verstanden. Der Sensor wird in Kugelhahn-armaturen getrennt vom Schließ-/Öffnungsmechanismus aus dem Prozess heraus- und in den Prozess hineingefahren. Hierzu wird der Kugelhahn geschlossen bzw. geöffnet. Zwecks Reinigung des Sensors wird der Sensor in der Wartungsposition in eine vom Prozess abgetrennte Spülkammer eingebracht.

Wechselarmaturen werden von der Anmelderin in unterschiedlichen Ausge-staltungen unter der Bezeichnung 'CleanFit' angeboten und vertrieben. Armaturen mit Verschlußzapfen werden beispielsweise unter den Bezeich-nungen CleanFit S, CPA 471, CPA 472, CPA 473 und CPA 474. geführt. Bei diesen Wechselarmaturen ist die Halterung für den Sensor selbst als Dichtelement ausgestaltet. Der vordere Teil der Halterung ist als Zapfen ausgebildet, der bereits während des Zurückfahrens zum Prozessanschluss hin radial abdichtet. Der Aufbau des Dichtungssystems der Armaturen CPA 471 und CPA 472 gewährleistet dabei eine perfekte Trennung zwischen der Spülkammer und damit der "Außenwelt", und dem Prozess - und zwar in jeder Stellung der Halterung.

Es versteht sich von selbst, dass diese Trennung nur wirksam ist, wenn die Dichtringe nicht beschädigt sind. Eine konsequente Kontrolle der Dichtringe ist daher unbedingt zu empfehlen. Allerdings bedeutet Kontrolle bei vielen Armaturen eine Demontage der kompletten Wechselarmatur. Darüber hinaus darf eine Kontrolle bzw. ein Austausch der Dichtringe nur durch geschultes Personal durchgeführt werden, da die Armatur anschließend wieder korrekt unter den herrschenden Prozessbedingungen arbeiten muss.

Im Falle der CPA 471 und CPA 472 liegen die beiden für die Dichtfunktion wichtigen O-Ringe außen an der Halterung des Sensors und sind so relativ einfach zu kontrollieren und gegebenenfalls zu ersetzen. Hierzu muss die Armatur während einer Prozesspause aus der Prozessadaption genommen werden.

In DE 33 25 309 A1 ist eine Messwertgebereinrichtung mit einer Führungseinrichtung beschrieben, die an einem Anschlussstutzen eines Behälters befestigbar ist und mit einem Absperrorgan versehen ist. In der Führungseinrichtung ist eine Sonde zwischen einer Betriebsstellung und einer Einsetzstellung verschieblich gelagert. Die Sonde wird in der Führungseinrichtung durch eine Führungsbuchse an der Sonde geführt, die auf der Sonde gleitet und die in die zylindrische Führungseinrichtung an ihrem prozessabgewandten Ende eingesteckt und mittels eines Arretiergliedes in der Führungseinrichtung gehalten wird. An ihrem vorderen Ende weist die Sonde einen Messwertgeber auf und ist in diesem Bereich mit einer außen liegenden Dichtung ausgestattet, die in Betriebsstellung der Sonde mit dem Führungskanal des Anschlussstutzens zusammenwirkt, um dafür zu sorgen, dass kein Medium aus dem Behälter in den rückwärtigen Teil der Messwertgebereinrichtung gelangt. In der Einsetzstellung ist das Absperrorgan geschlossen und verhindert so das Eindringen von Medium aus dem Behälter in die Messwertgebereinrichtung. In den Innenzylinder der Führungseinrichtung kann in dieser Stellung Sterilisationsmedium zur Sterilisierung der in die Führungseinrichtung zurückgezogenen Sonde eingeleitet werden. Der in dem Innenzylinder liegende Teil der Sonde ist durch Dichtungsringe in der Führungsbuchse nach rückwärts abgedichtet.

Neben diesen außen liegenden O-Ringen besitzt die Armatur zusätzlich im Bereich der Führung der Halterung auch innen liegende O-Ringe. Durch den Inneneinbau sind diese O-Ringe vor äußeren Einflüssen wie abrasiven Medien gut geschützt. Es ist jedoch nicht ganz einfach, die üblicherweise innen in der Spülkammer liegenden O-Ringe auszutauschen. Die O-Ringe sind in der Spülkammer im Bereich der Durchführung für die Halterung angeordnet.

In EP 1 156 323 A1 ist eine Sondeneinrichtung zur Aufnahme, Positionierung, Kalibrierung und/oder Wartung einer Messelektrode beschrieben, die ein in das Medium eintauchbares Sondengehäuse, eine Halterung für die Messelektrode, die zwischen einer Mess- und einer Kalibrierstellung verschiebbar ist, und eine Kalibrierkammer, in der die Messelektrode in einer Kalibrierstellung gegen das zu messende Medium abgedichtet positionierbar ist, aufweist. Die Halterung ist in einer Buchse axial verschiebbar geführt, die keine Dichtfunktion besitzt. Die Abdichtung der Kalibrierkammer gegenüber einer Prozessflüssigkeit erfolgt durch eine Drehschiebereinrichtung mit einem festen Dichtteil und einem demgegenüber drehbaren Drehteil, die durch gegenseitig anliegende, plane Dichtflächen abgedichtet sind.

Ein Austausch der Dichtringe ist in gewissen Zeitabständen zwecks Sicherstellung der Dichtfunktion notwendig, da O-Ringe, die üblicherweise aus Polymeren bestehen, nach einer gewissen Standzeit an einer Oberfläche, auf die sie angepresst werden, festkleben. Wird nun die Halterung relativ zum Armaturengehäuse bewegt, so besteht die Gefahr, dass die Oberfläche des Polymers, also des O-Rings, beschädigt wird. Dieser Effekt ist unter der Bezeichnung Slipstick-Effekt bekannt. Bei Auftreten des Effekts ist die Dichtfunktion eines O-Rings nicht mehr gewährleistet.

Problematisch ist weiterhin bei den bisher bekannten Lösungen, dass das Dichtkonzept mit zwei innen liegenden O-Ringen im Armaturengehäuse zu Total-Ausfällen der Wechselarmatur führen kann, wenn bei einem Verfahren der rohrförmigen Halterung von einer Position in die andere durch Reibung an den Kontaktflächen Riefen- und Kraterbildung auftritt. Eine entsprechende Beschädigung macht den Austausch der Wechselarmatur unbedingt notwendig.

Ein vergleichbares Dichtungssystem besitzt die Armatur CPA 475. In dieser für den Einsatz bei sterilen Anwendungen in der Lebensmittel- und Pharmaindustrie konzipierten Armatur kommt eine Formdichtung zum Einsatz. Hier ist die Halterung für den Sensor so ausgeformt, dass der Verschlusszapfen in der Serviceposition und die Halterung in der Messposition jeweils zusammen mit der Formdichtung die Dichtigkeit gewährleisten. Damit ist die Halterung in der Spülkammer frei reinig- und sterilisierbar.

Die Formdichtung ist von ausschlaggebender Wichtigkeit dafür, dass die Wechselarmatur in Prozessen mit hohen Hygieneanforderungen eingesetzt werden kann. Insbesondere ist die Formdichtung so ausgeformt, dass keine Hinterschnitte wie bei O-Ringen entstehen können, die wiederum aufgrund der schlechten Zugänglichkeit der hinterschnittenen Bereiche als Sammelbecken für Bakterien und Verunreinigungen dienen.

Der Erfindung liegt die Aufgabe zugrunde, eine Wechselarmatur vorzuschlagen, die eine einfache Demontage/Montage eines Dichtrings ermöglicht.

Die Aufgabe wird dadurch gelöst, dass eine Dichtbuchse vorgesehen ist, die auf der der rohrförmigen Halterung zugewandten Oberfläche zumindest eine umlaufende Nut mit einem Dichtring aufweist, wobei die Dichtbuchse sie in dem Armaturengehäuse positioniert ist, so dass sie die Halterung parallel zu Ihrer Längsachse zwischen der ersten Position und der zweiten Position führt.

Ein Vorteil der erfindungsgemäßen Wechselarmatur ist darin zu sehen, dass die an der Dichtbuchse außen liegenden defekten Dichtungen auf einfache Art und Weise durch neue Dichtungen ersetzt werden können. Da sich die Dichtringe einfach austauschen lassen, können Sie flexibel an jede Applikation angepasst werden. Auch wird die Dichtbuchse im Fehlerfall komplett ausgetauscht, wodurch sich die Ausfallzeit der Wechselarmatur bei einer Störung reduziert. Durch den Austausch ist jeweils eine optimale Dichtfunktion des Wechselarmatur gewährleistet. Allgemein lässt sich sagen, dass sich die erfindungsgemäße Wechselarmatur durch eine erhöhte Leistungsfähigkeit und eine große Servicefreundlichkeit auszeichnet. Hierdurch wird die Akzeptanz und Zufriedenheit der Kunden erhöht.

Gemäß einer Weiterbildung der erfindungsgemäßen Wechselarmatur sind an der Oberfläche in Bewegungsrichtung der Halterung eine erste Nut, eine zweite Nut und eine dritte Nut vorgesehen, wobei in jeder Nut jeweils ein Dichtring positioniert ist. Bevorzugt handelt es sich bei den beiden äußeren Dichtringen um Abstreifringe, während es sich bei dem mittleren Ring bevorzugt um einen O-Ring handelt.

Die Dichtbuchse ist aus einem Kunststoff und die Wechselarmatur aus Metall gefertigt. Dabei kommt bei der Dichtbuchse ein hochwertiger Kunststoff, PEEK, zum Einsatz. PEEK besitzt eine hohe Temperaturbeständigkeit und ist sehr resistent gegenüber aggressiven chemischen Prozessmedien. Darüber hinaus zeichnet PEEK sich durch eine hervorragende Formbeständigkeit aus, was für die Führungs- und Lagerfunktion der Dichtbuchse natürlich sehr wichtig ist. Das Armaturengehäuse und die Rohrleitung sind hingegen aus Edelstahl gefertigt.

Diese Kombination einer Dichtbuchse aus Kunststoff mit einem metallenen Armaturengehäuse hat den Vorteil, dass bei Verschleiß oder Beschädigung der Dichtringe die Gefahr ausgeschlossen ist, dass im Bereich der Kontaktflächen von rohrförmiger Halterung und Dichtbuchse im Durchgang der Spülkammer Riefen oder sonstige Beschädigungen der Oberflächen auftreten, was zu einer dauerhaften Undichtigkeit der Wechselarmatur führen würden.

Gemäß einer bevorzugten Ausgestaltung der erfindungsgemäßen Wechsellarmatur ist die Dichtbuchse als Modul ausgebildet, das mittels einer Befestigung in dem Armaturengehäuse befestigbar ist. Ist die Dichtbuchse als austauschbares Modul ausgestaltet, so wird das Auswechseln defekter Dichtungen ganz erheblich erleichtert. Auch ist es möglich, die Module hinsichtlich der Materialwahl optimal auf den jeweiligen Anwendungsfall abzustimmen. Die Befestigung erfolgt bevorzugt über Schrauben.

Alternativ wird vorgeschlagen, dass die Dichtbuchse integraler Teil des Armaturengehäuses ist. Beispielsweise kann auch nachträglich aus einer herkömmlichen Wechselarmatur das teil, in dem die Dichtungen angeordnet sind, herausgedreht werden, um die erfindundungsgemäße Dichtbuchse einzubauen.

Das Armaturengehäuse umfasst eine Spülkammer für den Sensor handelt.

Wie bereits an vorhergehender Stelle erwähnt, befindet sich der Sensor in der ersten Position in der Spülkammer und wird hier gereinigt oder kalibriert oder bei Bedarf ausgetasucht. In der zweiten Position stellt der Sensor Messdaten über die physikalische und/oder chemische Prozessgröße zur Verfügung.

Bei dem Sensor kann es sich um jeden beliebigen Sensor handeln, der in gewissen Abständen gereinigt und oder nachkalibriert werden muss. Bevorzugt handelt es sich um einen potentiometrischen Sensor, beispiels-weise eine pH-Elektrode, eine Redox-Elektrode oder einen Sauerstoffsensor, oder um einen Temperatursensor.

Die Erfindung wird anhand der nachfolgenden Zeichnungen näher erläutert. Es zeigt:

Fig. 1: einen Längsschnitt durch eine bevorzugte Ausgestaltung der erfindungsgemäßen Wechselarmatur,

Fig. 1a: den in Fig. 1 mit A gekennzeichneten Ausschnitt, der die Form Dichtbuchse und ihre Anordnung der Dichtbuchse in der Spülkammer zeigt,

Fig. 2: einen Schnitt durch das Armaturengehäuse mit Einbauraum für die Dichtbuchse und

Fig. 3: die Dichtbuchse in Seitenansicht.

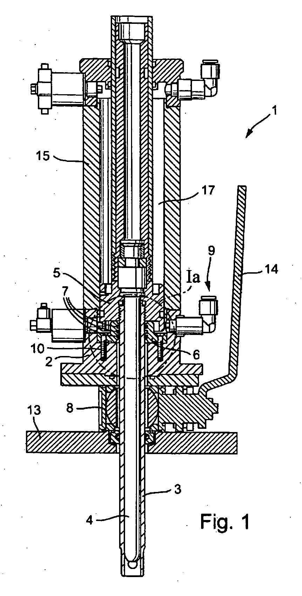

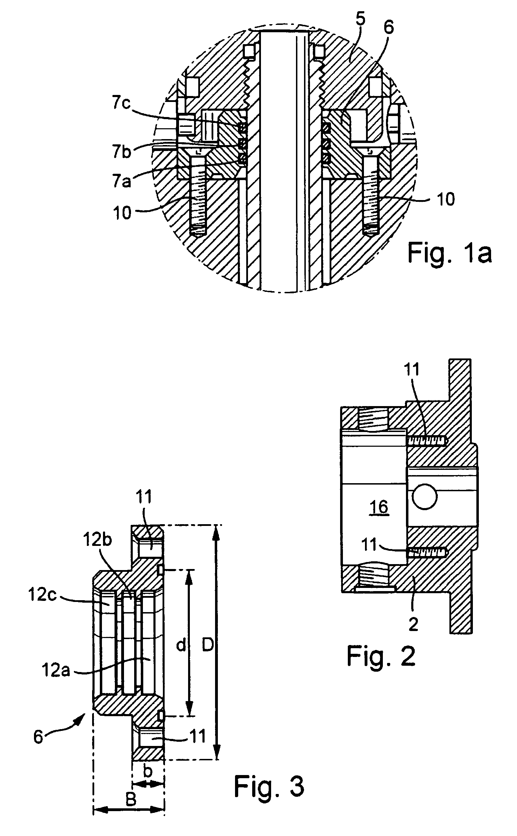

Fig. 1 zeigt einen Längsschnitt durch eine bevorzugte Ausgestaltung der erfindungsgemäßen Wechselarmatur 1. In Fig. 1a ist der in Fig. 1 mit A gekennzeichneten Ausschnitt dargestellt, der die Form Dichtbuchse 6 und ihre Anordnung in der Spülkammer 5 zeigt. Bei der Wechselarmatur 1 handelt es sich um die von der Anmelderin angebotene und vertriebene Prozess-Wechselarmatur 1 Cleanfit CPA473 - im dargestellten Fall mit manueller Betätigung des Kugelhahns 8.

Im gezeigten Fall befindet sich der Sensor 4, der in der rohrförmigen Halterung 3 in axialer Richtung bewegt werden kann, in der Messposition und stellt Messdaten über die jeweils gemessene oder überwachte Prozessgröße zur Verfügung.

Über einen pneumatischen Antrieb, der in der Fig. 1 nicht in allen Details gezeigt ist, wird der Sensor 4 - hier eine pH-Glaselektrode - in die Sevice- oder Wartungsposition verfahren. Sobald der Sensor 4 die Wartungsposition erreicht hat, wird der Kugelhahn 8 über den Verstellmechanismus 14 geschlossen, wodurch der Innenraum des Armaturengehäuses 2 gegen den Prozess hin abgedichtet ist. Während des Schließvorgangs ist der Innenraum des Armaturengehäuses 2 bis zur Spülkammer 5 für kurze Zeit in Kontakt mit dem Prozess. Ein Eindringen von Prozessmedium in den hinter der Spülkammer 5 befindlichen Antriebsraum 17 wird erfindungsgemäß durch die Dichtbuchse 6 verhindert.

Die bevorzugt als Modul ausgestaltete Dichtbuchse 6 (Fig. 3) besteht aus einem im wesentlichen zylinderförmigen Teil, wobei der eine Endbereich der Dicke b einen größeren Durchmesser D aufweist als der andere End-bereich der Dicke B mit dem Durchmesser d. Im Endbereich der Dicke b sind achsparallel Bohrungen 11 vorgesehen. Über in die Bohrungen 11, die sich sich auch in das Gehäuse der Spülkammer 5 erstrecken, eingebrachte Schrauben 10 ist die Dichtbuchse 6 an der Spülkammer 5 befestigbar. Bei der erfindungsgemäßen Wechselarmatur 1 ist es möglich, die Dichtringe 7a, 7b, 7c in Abhängigkeit von der jeweiligen Applikation zu wählen. Die Dichtringe 7a, 7b, 7c können bei Bedarf auch verschiedene Formen haben, da sich die Nuten 12a, 12b, 12c in der Dichtbuchse 6 auf einfache Art und Weise modifizieren lassen, ohne dass hierbei die fertigungstechnisch aufwändige Spülkammer 5 als solche abgeändert werden muss. Als besonders günstig ist es in diesem Zusammenhang anzusehen, dass die Dichtbuchse 6 auch aus einem anderen Material als die Spülkammer 5 gefertigt ist. Wird die Dichtbuchse 6 aus Kunststoff gefertigt, so lässt sich die Wahrscheinlichkeit minimieren, dass die Wechselarmatur 1 infolge von Riefen- oder Krater-bildung an den Kontaktflächen der relativ zueinander bewegten Komponenten dauerhaft undicht wird.

Die Dichtbuchse 6 dient der Lagerung und Führung der rohrförmigen Halterung 3 und dichtet - wie bereits gesagt - die Spülkammer 5 bei Öffnung des Kugelhahns 8 gegen den Prozess hin ab. Auf der Außenfläche der Dichtbuchse 6 sind - wie in Fig. 3 zu sehen - drei umlaufende Nuten 12a, 12b, 12c vorgesehen, in denen die Dichtringe 7a, 7b, 7c plaziert sind. Bevorzugt handelt es sich bei den beiden äußeren Dichtringen 7a, 7c um Abstreifringe, die an der Halterung 3 befindliche Partikel des Prozessmediums während des Verfahrens des Sensors 4 von einer Position in die andere Position abstreifen. Bei dem mittleren Dichtring 7b handelt es sich um einen O-Ring. Bevorzugt handelt es sich bei den äußeren Dichtringen 7 um zwei Turcon Varisealringe. Die Dichtbuchse 6 wird als Dichtpaket in den entsprechend für den Einbau in der Spülkammer 5 vorgesehenen Einbauraum 16 eingesetzt und dort fest montiert. Gut zu sehen ist der zu der Größe der Dichtbuchse 6 abgestimmte Einbauraum 16 in Fig. 2.

### Bezugszeichenliste

- 1: Wechselarmatur
- 2: Armaturengehäuse
- 3: rohrförmige Halterung
- 4: Sensor
- 5: Spülkammer
- 6: Dichtbuchse
- 7: Dichtring
- 7a: Abstreifring
- 7b: O-Ring
- 7c: Abstreifring
- 8: Kugelhahn
- 9: Pneumatikantrieb
- 10: Schraube
- 11: Bohrung
- 12: Nut
- 13: Flansch
- 14: Verstellmechanismus
- 15: Gehäuse für pneumatischen Antrieb
- 16: Einbauraum für Dichtbuchse 6
- 17: Antriebsraum

## Patentansprüche

1. Wechselarmatur (1) mit einem Armaturengehäuse (2) und mit einer in dem Armaturengehäuse (2) linear zwischen einer ersten Position und einer zweiten Position geführten rohrförmigen Halterung (3) für einen Sensor (4), wobei der Sensor (4) eine physikalische und/oder chemische Prozessgröße in einem Prozess bestimmt,
wobei eine Dichtbuchse (6) vorgesehen ist, die auf der der rohrförmigen Halterung (3) zugewandten Oberfläche zumindest eine umlaufende Nut (12; 12a, 12b, 12c) mit einem Dichtring (7; 7a, 7b, 7c) aufweist, und
wobei die Dichtbuchse (6) in dem Armaturen-gehäuse (2) positioniert ist, so dass sie die Halterung (3) parallel zu Ihrer Längsachse zwischen der ersten Position und der zweiten Position führt,
wobei das Armaturengehäuse (2) eine Spülkammer (5) für den Sensor (4) umfasst,
**dadurch gekennzeichnet, dass** das Armaturengehäuse (2) einen Antriebsraum (17) eines pneumatischen Antriebs umfasst, wobei ein Eindringen von Prozessmedium in den hinter der Spülkammer (5) befindlichen Antriebsraum (17) durch die Dichtbuchse (6) verhindert wird,
und wobei die Dichtbuchse (6) aus PEEK und das Armaturengehäuse (2) aus Edelstahl gefertigt ist.

2. Wechselarmatur nach Anspruch 1, wobei an der Oberfläche in Bewegungsrichtung der Halterung (3) eine erste Nut (12a), eine zweite Nut (12b) und eine dritte Nut (12c) vorgesehen sind, wobei in jeder Nut (12a, 12b, 12c) jeweils ein Dichtring (7a, 7b, 7c) positioniert ist.

3. Wechselarmatur nach Anspruch 2,
wobei es sich bei den Dichtringen (7a, 7c) in der ersten Nut (12a) und in der dritten Nut (12c) jeweils um einen Abstreifring handelt, während der Dichtring (7b) in der zweiten Nut (12b) als O-Ring ausgebildet ist.

4. Wechselarmatur nach Anspruch 1,
wobei die Dichtbuchse (6) als Modul ausgebildet ist, das mittels einer Befestigung (10, 11) in dem Armaturengehäuse (2) befestigbar ist.

5. Wechselarmatur nach Anspruch 1,
wobei die Dichtbuchse (6) integraler Teil des Armaturengehäuses (2) ist.

6. Wechselarmatur nach Anspruch 1,
wobei es sich bei dem Armaturengehäuse (2) um das Gehäuse einer Spülkammer (5) für den Sensor (4) handelt.

7. Wechselarmatur nach Anspruch 1,
wobei sich der Sensor (4) in der ersten Position in der Spülkammer befindet und
wobei der Sensor (4) in der zweiten Position Messdaten über die physikalische und/oder chemische Prozessgröße bereitstellt.

8. Wechselarmatur nach Anspruch 7,
wobei es sich bei dem Sensor (4) um einen potentiometrischen Sensor handelt.

9. Wechselarmatur nach Anspruch 7,
wobei es sich bei dem Sensor (4) um einen Temperatursensor handelt.

## Claims

1. Retractable assembly (1) with an assembly housing (2) and a tubular bracket (3) for a sensor (4), said bracket being routed linearly between a first position and a second position, where the sensor (4) determines a physical and/or chemical process variable in a process, where a sealing bush (6) is provided which has at least one circumferential groove (12; 12a, 12b, 12c) with a sealing ring (7; 7a, 7b, 7c) on the surface facing towards the tubular bracket (3), and where the sealing bush (6) is positioned in the assembly housing (2) in such a way that it guides the bracket (3) parallel to its longitudinal axis between the first position and the second position,
where the assembly housing (2) comprises a rinse chamber (5) for the sensor (4), **characterized in that** the assembly housing (2) comprises a drive compartment (17) of a pneumatic drive, whereby the sealing bush (6) prevents the penetration of process medium into the drive compartment (17) located behind the rinse chamber (5),
and whereby the sealing bush (6) is made from PEEK and the assembly housing (2) is made from stainless steel.

2. Retractable assembly as per Claim 1, where a first groove (12a), a second groove (12b) and a third groove (12c) is provided on the surface in the direction of movement of the bracket (3), and whereby a sealing ring (7a, 7b, 7c) is positioned in each of the grooves (12a, 12b, 12c).

3. Retractable assembly as per Claim 2, whereby the sealing rings (7a, 7c) in the first groove (12a) and in the third groove (12c) are both scraper rings, while the sealing ring (7b) in the second groove (12b) is designed as an O-ring.

4. Retractable assembly as per Claim 1, where the sealing bush (6) is designed as a module which can be secured in the assembly housing (2) with a fastener (10, 11).

5. Retractable assembly as per Claim 1, where the sealing bush (6) is an integral part of the assembly housing (2).

6. Retractable assembly as per Claim 1, where the assembly housing (2) is the housing of a rinse chamber (5) for the sensor (4).

7. Retractable assembly as per Claim 1, where the sensor (4) is in the rinse chamber in the first position and
where the sensor (4) in the second position makes measured data available on the physical and/or chemical process variable.

8. Retractable assembly as per Claim 7, where the sensor (4) is a potentiometric sensor.

9. Retractable assembly as per Claim 7, where the sensor (4) is a temperature sensor.

## Revendications

1. Sonde rétractable (1) avec un boîtier de sonde (2) et avec un support (3) tubulaire guidé de façon linéaire entre une première position et une deuxième position, destiné à un capteur (4), le capteur (4) déterminant une grandeur de process physique et/ou chimique au sein d'un process,
pour laquelle est prévue une douille d'étanchéité (6), laquelle présente sur la surface faisant face au support (3) tubulaire au moins une rainure périphérique (12 ; 12a, 12b, 12c) avec une bague d'étanchéité (7 ; 7a, 7b, 7c), et la douille d'étanchéité (6) étant positionnée dans le boîtier de sonde (2) de telle manière à ce qu'elle guide le support (3) parallèlement à son axe longitudinal entre la première position et la deuxième position,
le boîtier de sonde (2) comprenant une chambre de rinçage (5) pour le capteur (4), **caractérisée en ce que** le boîtier de sonde (2) comprend un compartiment d'entraînement (17) relatif à un entraînement pneumatique, une infiltration du produit mesuré dans le compartiment d'entraînement (17) se trouvant derrière la chambre de rinçage (5) étant empêchée par la douille d'étanchéité (6),
et la douille d'étanchéité (6) étant fabriquée en PEEK et le boîtier de sonde (2) en acier inoxydable.

2. Sonde rétractable selon la revendication 1, pour laquelle est prévue, sur la surface dans le sens du mouvement du support (3), une première rainure (12a), une deuxième rainure (12b) et une troisième rainure (12c), une bague d'étanchéité (7a, 7b, 7c) étant respectivement positionnée dans chaque rainure (12a, 12b, 12c).

3. Sonde rétractable selon la revendication 2, pour laquelle il s'agit, concernant les bagues d'étanchéité (7a, 7c) positionnées dans la première rainure (12a) et dans la troisième rainure (7c) respectivement d'une bague racleuse, tandis que la bague d'étanchéité (7b) positionnée dans la deuxième rainure (12b) est formée en tant que joint torique.

4. Sonde rétractable selon la revendication 1, pour laquelle la douille d'étanchéité (6) est formée en tant que module, qui peut être fixé au moyen d'une fixation (10, 11) dans le boîtier de sonde (2).

5. Sonde rétractable selon la revendication 1, pour laquelle la douille d'étanchéité (6) fait partie intégrante du boîtier de sonde (2).

6. Sonde rétractable selon la revendication 1, pour laquelle il s'agit, concernant le boîtier de sonde (2), du boîtier d'une chambre de rinçage (5) pour le capteur (4).

7. Sonde rétractable selon la revendication 1, pour laquelle le capteur (4) se trouve dans la première position au sein de la chambre de rinçage
et
pour laquelle le capteur (4) met à disposition, dans la deuxième position, des données de mesure sur la grandeur de process physique et/ou chimique.

8. Sonde rétractable selon la revendication 7, pour laquelle il s'agit, concernant le capteur (4), d'un capteur potentiométrique.

9. Sonde rétractable selon la revendication 7, pour laquelle il s'agit, concernant le capteur (4), d'un capteur de température.
